# EUROPEAN PATENT APPLICATION

(11) **EP 4 450 435 A1**
(43) Date of publication of application: **23.10.2024**
(21) Application number: 23839090.0
(22) Date of filing: 13.09.2023
(51) Int. Cl.: B65H 19/18

(54) **WINDING SWITCHING AND STRIP RECEIVING MODULE, WINDING SWITCHING AND AUTOMATIC STRIP RECEIVING MECHANISM, WINDING DEVICE, AND PRODUCTION LINE**

(30) Priority: 14.07.2022 CN 202210833402
(71) Applicant: Hymson Laser Technology Group Co., Ltd., Shenzhen, Guangdong 518110 (CN)
(72) Inventor: ZHANG, Guanglong, Shenzhen, Guangdong 518110 (CN); YUAN, Chaofeng, Shenzhen, Guangdong 518110 (CN); ZHANG, Ganggang, Shenzhen, Guangdong 518110 (CN); GU, Deji, Shenzhen, Guangdong 518110 (CN); LIU, Xiaolong, Shenzhen, Guangdong 518110 (CN); MA, Taiqing, Shenzhen, Guangdong 518110 (CN); TANG, Jidan, Shenzhen, Guangdong 518110 (CN)
(74) Representative: Osterhoff, Utz
(86) International application number: PCT/CN2023/118617
(87) International publication number: WO 2024/012606

(57) **Abstract**

Disclosed are a reel changing and belt receiving module, a reel changing and automatic belt receiving mechanism, a winding device and a production line. The reel changing and belt receiving module includes: a horizontal moving assembly (1) and a forward and backward moving assembly (3). An output end of the forward and backward moving assembly is provided with a belt receiving roller (41) and a belt receiving roller driven assembly (42), and a cutter assembly (43) is provided on the belt receiving roller. An output end of the belt receiving roller driven assembly is connected to one end of the belt receiving roller and is configured to drive the belt receiving roller to rotate. The reel changing and automatic belt receiving mechanism includes an installation main plate provided with a rotation roller (6) a first roller cylinder (71) and a second roller cylinder (72). The reel changing and automatic belt receiving mechanism also includes the reel changing and belt receiving module. The device of the production line includes the reel changing and belt receiving module or the device of the production line includes the reel changing and automatic belt receiving mechanism, or the production line adopts the winding device. The reel changing and belt receiving module, the reel changing and automatic belt receiving mechanism, the winding device and the production line can save labor and time costs, and improve the working efficiency and the production benefits of the enterprise.

## Description

### TECHNICAL FIELD

The present application relates to the technical field of material belt winding, and in particular to a reel changing and belt receiving module, a reel changing and automatic belt receiving mechanism, a winding device and a production line.

### BACKGROUND

In the processing of batteries, packaging and other industrial fields, the processes of fully automatic winding, coating and die-cutting all include the process of winding and unwinding the pole piece material belt. During the production process of rolling, full or empty rolls may be encountered, and at this time, the reel needs to be changed.

At present, the common way of changing reels is manual reel changing or through corresponding mechanisms. Due to structural or design defects, the existing reel changing mechanism needs to be stopped when changing reels, which affects the work efficiency; while the manual way of changing reels has the disadvantage of low reel changing efficiency, and the device needs to be stopped when changing reels manually, which further affects the overall work efficiency of the device, greatly increases the labor and time costs, and affects the production benefits of the enterprise.

In summary, the existing manual reel changing or mechanism reel changing has technical defects such as low reel changing efficiency, high time and labor costs, device shutdown, and affecting the work efficiency of the device, which seriously affect the further development and promotion application of the field.

To this end, the purpose of the present application is to provide a new technical solution to solve the existing technical problems.

### SUMMARY

In order to overcome the shortcomings in the related art, the present application provides a reel changing and belt receiving module, a reel changing and automatic belt receiving mechanism, a winding device and a production line, which solve the technical defects of the existing technology such as the need for device shutdown, affecting the working efficiency of the device, and high labor and time costs.

The technical solution adopted by the present application to solve the technical problems is:
a reel changing and belt receiving module, including: a horizontal moving assembly; an output end of the horizontal moving assembly is provided with a forward and backward moving assembly, an output end of the forward and
backward moving assembly is provided with a belt receiving roller and a belt receiving roller driven assembly, and a cutter assembly is provided on the belt receiving roller; an output end of the belt receiving roller driven assembly is connected to one end of the belt receiving roller and is configured to drive the belt receiving roller to rotate, and the rotating belt receiving roller is configured to drive the cutter assembly to rotate around a central shaft of the belt receiving roller to cut a belt.

In an embodiment, a cutter protection cover configured to rotate around the central shaft of the belt receiving roller is provided on a side of the belt receiving roller; a protection cover driven assembly is provided on an installation seat at one end of the belt receiving roller, and the protection cover driven assembly is configured to drive the cutter protection cover to rotate around the central shaft of the belt receiving roller.

In an embodiment, the protection cover driven assembly includes a protection cover driven motor, and the belt receiving roller driven assembly includes a belt receiving roller driven motor, a belt receiving roller reducer provided at an output end of the belt receiving roller driven motor, and a shaft coupling connected between an output end of the belt receiving roller reducer and one end of a rotation shaft of the belt receiving roller.

In an embodiment, a protection cover installation plate is rotatably provided on the rotation shaft of the belt receiving roller, and the cutter protection cover is installed on the protection cover installation plate; a protection cover transmission assembly is provided between an output end of the protection cover driven assembly and one of the protection cover installation plates, and the protection cover driven assembly is configured to drive the protection cover installation plate and the cutter protection cover to rotate through the protection cover transmission assembly.

In an embodiment, the protection cover transmission assembly includes an active synchronization wheel provided at the output end of the protection cover driven assembly, a driven synchronization wheel provided on one of the protection cover installation plates, and a synchronization belt wound between the active synchronization wheel and the driven synchronization wheel; and the protection cover driven assembly is configured to drive the protection cover installation plate and the cutter protection cover to rotate through the active synchronization wheel, the synchronization belt, and the driven synchronization wheel.

In an embodiment, the cutter assembly includes a cutter installation seat fixedly installed on the installation shaft of the belt receiving roller, a cutter installation plate fixed on the cutter installation seat, and a sawtooth cutter fixedly installed on the cutter installation plate.

In an embodiment, the output end of the horizontal moving assembly is provided with a horizontal moving installation seat, and the forward and backward moving assembly is directly or indirectly installed on the horizontal moving installation seat.

In an embodiment, the output end of the horizontal moving assembly is provided with a swing adjustment assembly, and the forward and backward moving assembly is provided at an output end of the swing adjustment assembly.

In an embodiment, the swing adjustment assembly includes a swing driven motor, a swing reducer provided at an output end of the swing driven motor, and a swing installation plate provided on an output shaft of the swing reducer; the forward and backward moving assembly is fixedly installed on the swing installation plate, and the swing driven motor is configured to drive the swing installation plate to swing through the swing reducer and further drive the forward and backward moving assembly to swing through the swing installation plate.

In an embodiment, the output end of the forward and backward moving assembly is provided with a belt receiving roller installation seat, and the belt receiving roller and the belt receiving roller driven assembly are installed on the belt receiving roller installation seat.

In an embodiment, the horizontal moving assembly includes a horizontal moving guide rail and a horizontal moving driven motor; the forward and backward moving assembly is a pneumatic moving assembly, and the output end of the forward and backward moving assembly is provided with a forward and backward moving installation plate.

The present application also provides:
a reel changing and automatic belt receiving mechanism, including: an installation main plate, and a rotation roller, a first roller cylinder and a second roller cylinder are provided on the installation main plate. The reel changing and
automatic belt receiving mechanism also includes the reel changing and belt receiving module.

In an embodiment, pairs of rotation rollers are provided to convey material belt products, and the first roller cylinder and the second roller cylinder are configured for rolling and cooperating for rolling work in different time periods.

The present application also provides a winding device, including: the reel changing and belt receiving module; or the reel changing and automatic belt receiving mechanism.

The present application also provides a production line, a device of the production line includes the reel changing and belt receiving module, or the device of the production line includes the reel changing and automatic belt receiving mechanism, or the production line adopts the winding device.

The beneficial effects of the present application are as follows: the present application provides a reel changing and belt receiving module, a reel changing and automatic belt receiving mechanism, a winding device and a production line, which can realize non-stop and automatic reel changing in actual production, which not only saves labor and time costs, but also greatly improves the working efficiency of the device, reduces production costs, and improves the production benefits of the enterprise.

In summary, the reel changing and belt receiving module, the reel changing and automatic belt receiving mechanism, the winding device and the production line solve the technical defects in related art, such as the need for device shutdown, affecting device working efficiency, and high labor and time costs.

### BRIEF DESCRIPTION OF THE DRAWINGS

The present application is further described below with reference to the accompanying drawings and embodiments.
FIG. 1 is a schematic assembly view of a reel changing and belt receiving module according to an embodiment of the present application.
FIG. 2 is a schematic action view of a reel changing and automatic belt receiving mechanism before a reel is changed into place according to an embodiment of the present application.
FIG. 3 is a schematic action view of the reel changing and automatic belt receiving mechanism during a reel changing process according to an embodiment of the present application.
FIG. 4 is a schematic action view of the reel changing and automatic belt receiving mechanism after the reel is changed into place according to an embodiment of the present application.

### DETAILED DESCRIPTION OF THE EMBODIMENTS

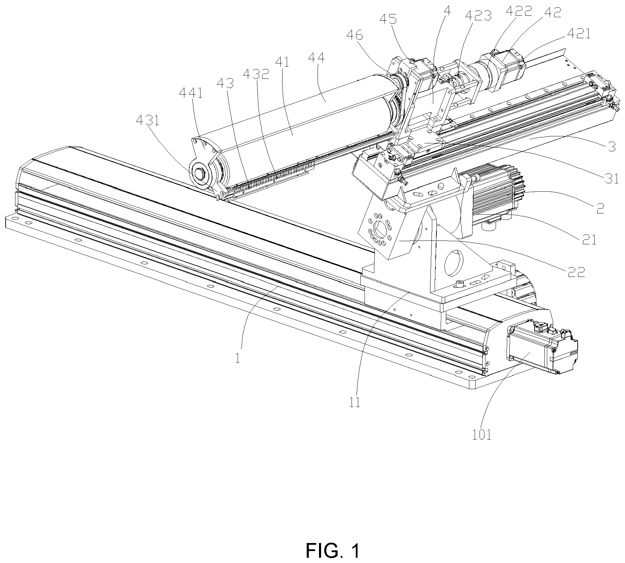

The concept, specific structure and technical effects of the present application will be described clearly and in details with reference to embodiments and accompanying drawings, so as to fully understand the purpose, features and effects of the present application. Obviously, the embodiments described are only part of the present application, not all embodiments. Based on the embodiments of the present application, other embodiments obtained by those skilled in the art without creative efforts are within the scope of the present application. In addition, all the connections/connection relationships involved in the present application do not refer to the direct connection of components, but to the addition or reduction of connection accessories according to the specific implementation to form a better connection structure. The various technical features of the present application can be combined interactively without conflicting with each other, as shown in FIGS. 1-4.

Referring to FIG. 1, the present application provides:

A reel changing and belt receiving module, including a horizontal moving assembly 1. In this embodiment, the horizontal moving assembly 1 includes a horizontal moving guide rail and a horizontal moving driven motor 101, and the horizontal moving driven motor 101 is a power source of the horizontal moving assembly 1. In other embodiments, according to different implementation environments, a moving assembly that meets the motion requirements, such as a horizontal electric cylinder, an oil cylinder, or a pneumatic cylinder, can be selected as the horizontal moving assembly.

The output end of the horizontal moving assembly 1 is directly or indirectly provided with a forward and backward moving assembly 3, and the moving direction of the horizontal moving assembly 1 is perpendicular to the forward and backward direction of the forward and backward moving assembly 3. The output end of the forward and backward moving assembly 3 is provided with a belt receiving roller 41 and a belt receiving roller driven assembly 42. In this embodiment, the output end of the horizontal moving assembly 1 is provided with a swing adjustment assembly 2, specifically, the output end of the horizontal moving assembly 1 is provided with a horizontal moving installation seat 11, and the swing adjustment assembly 2 is fixedly installed on the horizontal moving installation seat 11. The output end of the swing adjustment assembly 2 is provided with a forward and backward moving assembly 3. The swing adjustment assembly 2 includes a swing driven motor 21, a swing reducer provided at the output end of the swing driven motor 21, and a swing installation plate 22 provided on the output shaft of the swing reducer. The forward and backward moving assembly 3 is fixedly installed on the swing installation plate 22, the swing driven motor 21 can drive the swing installation plate 22 to swing through the swing reducer and further drive the forward and backward moving assembly 3 to swing through the swing installation plate 22.

The output end of the forward and backward moving assembly 3 is provided with a belt receiving roller installation seat 4. In this embodiment, the forward and backward moving assembly 3 is a pneumatic moving assembly, the output end of the forward and backward moving assembly 3 is provided with a forward and backward moving installation plate 31, and the belt receiving roller installation seat 4 is fixedly installed on the forward and backward moving installation plate 31. The forward and backward moving assembly 3 is configured to drive the belt receiving roller installation seat 4 and other components fixed on the belt receiving roller installation seat 4 to move forward and backward. The belt receiving roller installation seat 4 is provided with a belt receiving roller 41 and a belt receiving roller driven assembly 42. The belt receiving roller 41 is provided with a cutter assembly 43. The cutter assembly 43 includes a cutter installation seat 431 fixedly installed on the installation shaft of the belt receiving roller 41, a cutter installation plate fixed on the cutter installation seat 431, and a sawtooth cutter 432 fixedly installed on the cutter installation plate. The output end of the belt receiving roller driven assembly 42 is connected to one end of the belt receiving roller 41 and can drive the belt receiving roller 41 to rotate. The rotating belt receiving roller 41 can drive the cutter assembly 43 to rotate around the central shaft of the belt receiving roller 41 to cut the belt.

In an embodiment, a cutter protection cover 44 that can rotate around the central shaft of the belt receiving roller 41 is provided on the side of the belt receiving roller 41, and a protection cover driven assembly 45 is provided on the belt receiving roller installation seat 4. The protection cover driven assembly 45 is configured to drive the cutter protection cover 44 to rotate around the central shaft of the belt receiving roller 41. The protection cover driven assembly 45 includes a protection cover driven motor. The belt receiving roller driven assembly 42 includes a belt receiving roller driven motor 421, a belt receiving roller reducer 422 provided at the output end of the belt receiving roller driven motor 421, and a shaft coupling 423 connected between the output end of the belt receiving roller reducer 422 and one end of the rotation shaft of the belt receiving roller 41.

Further, a protection cover installation plate 441 is rotatably provided on the rotation shaft of the belt receiving roller 41, and the cutter protection cover 44 is installed on the protection cover installation plate 441. A protection cover transmission assembly 46 is provided between the output end of the protection cover driven assembly 45 and one of the protection cover installation plates 441, and the protection cover driven assembly 45 can drive the protection cover installation plate 441 and the cutter protection cover 44 to rotate through the protection cover transmission assembly 46. The protection cover transmission assembly 46 includes an active synchronization wheel provided at the output end of the protection cover driven assembly 45, a driven synchronization wheel provided on one of the protection cover installation plates 441, and a synchronization belt wound between the active synchronization wheel and the driven synchronization wheel. The protection cover driven assembly 45 can drive the protection cover installation plate 441 and the cutter protection cover 44 to rotate through the active synchronization wheel, the synchronization belt, and the driven synchronization wheel.

When the present application is specifically implemented, the horizontal moving assembly 1 can drive the belt receiving roller 41 to move horizontally to a suitable position, and the swing adjustment assembly 2 can drive the belt receiving roller 41 to swing, so as to realize the position swing change of the belt receiving roller 41 when changing reels. The forward and backward moving assembly 3 can drive the belt receiving roller 41 to move forward and backward. Furthermore, the belt receiving roller driven motor 421 in the belt receiving roller driven assembly 42 can drive the belt receiving roller 41 to rotate through the belt receiving roller reducer 421 and the shaft coupling 423, and the belt receiving roller 41 can drive the cutter assembly 43 to rotate, so that the material belt is cut by the sawtooth cutter 432 in the cutter assembly 43.

In order to protect the cutter assembly 43 and prevent the cutter assembly 43 from switching between the working state and the idle state, a cutter protection cover 44 and a protection cover driven assembly 45 corresponding to the cutter protection cover 44 are provided. Specifically, the protection cover driven motor in the protection cover driven assembly 45 drives the cutter protection cover 44 to rotate through the protection cover transmission assembly 46. When the cutter assembly 43 is required to be cut, the protection cover driven assembly 45 drives the cutter protection cover 44 to rotate to a position misaligned with the cutter assembly 43 through the protection cover transmission assembly 46. At this time, the cutter assembly 42 can be configured to cut the material belt. When the material belt is cut by the cutter assembly 43, the protection cover driven assembly 45 can be configured to drive the cutter protection cover 44 to rotate to a position covering the cutter assembly 43, so as to prevent the cutter assembly 43 from being damaged by other components or prevent the cutter assembly 43 from causing damage to the operator, thereby improving safety.

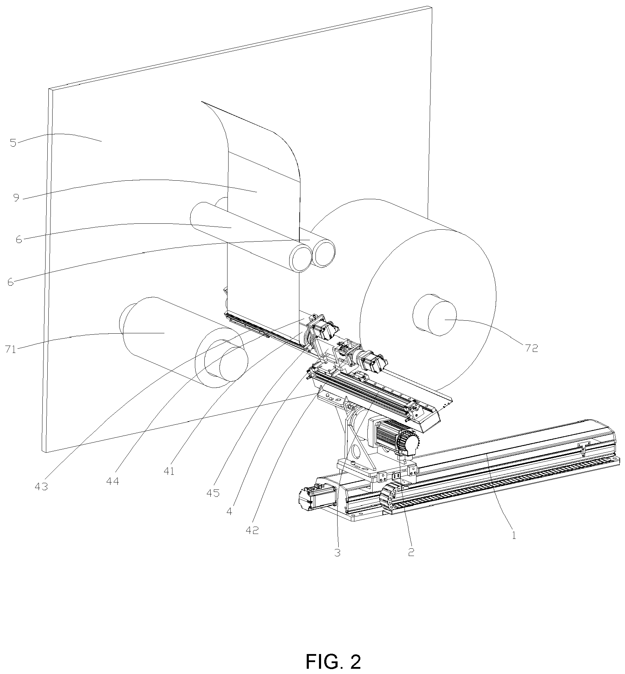

Specifically referring to FIG. 2, FIG. 3, and FIG. 4, based on the above-mentioned reel changing and belt receiving module, the present application also provides a new solution, which is:
a reel changing and automatic belt receiving mechanism, including an installation main plate 5, on which a rotation roller 6, a first roller cylinder 71 and a second roller cylinder 72 are provided, and the reel changing and automatic belt receiving mechanism also includes the reel changing and belt receiving module. Specifically, the rotation rollers 6 are provided in pairs and configured to convey the material belt product 9, and the first roller cylinder 71 and the second roller cylinder 72 are configured for rolling and cooperate for rolling work in different time periods.

Generally, in the reel changing and automatic belt receiving mechanism, the installation main plate 5 is the main supporting component and plays the main supporting and installing role. At least one of the two rotation rollers 6 is an active roller. When the two rotation rollers 6 clamp the material belt product 9, the driven component (generally a motor) in the rotation roller 6 drives the rotation roller 6 to rotate, and the rotation roller 6 further drives the material belt to be transported forward.

In addition, the first roller cylinder 71 and the second roller cylinder 72 are both active rolling cylinders, which have rolling power to realize the rolling action of the material belt product 9. In an embodiment, when the rolling power of the rolling cylinder is sufficient, without damaging the material belt product 9 and affecting the rolling efficiency, the two rotation rollers 6 can also be configured as driven rollers, and the rotation rollers 6 do not have a rotational force.

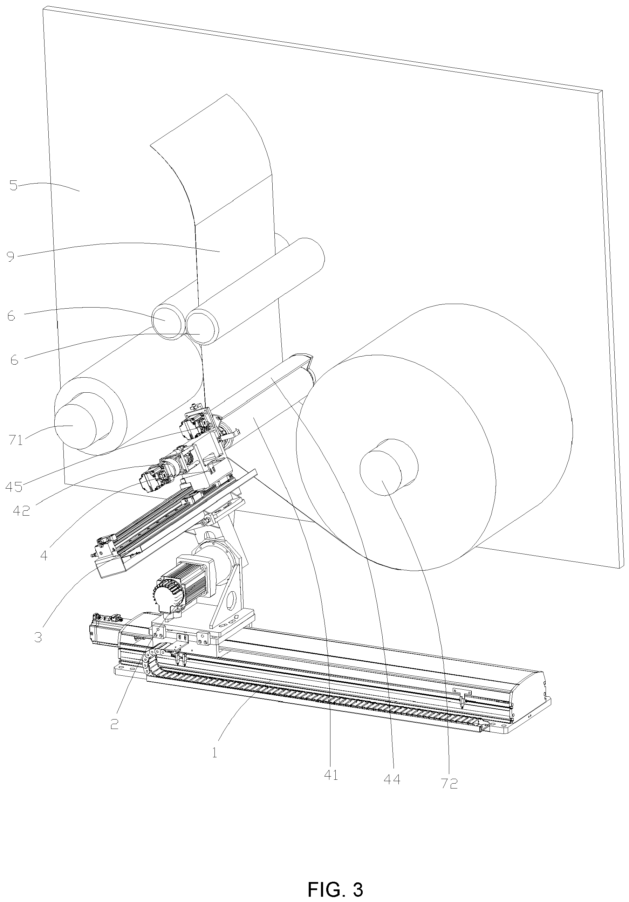

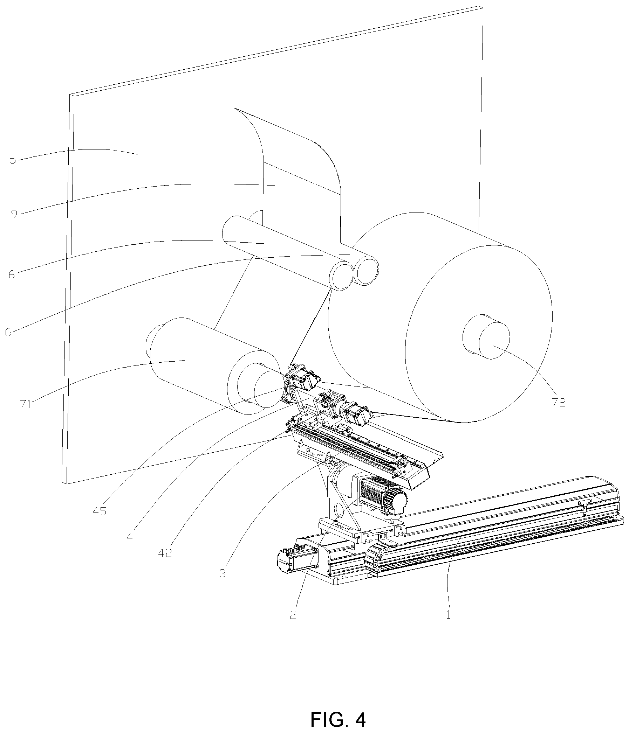

When this reel changing and automatic belt receiving mechanism is working, referring to FIG. 3, when one of the rolling cylinders reaches the reel changing status, under the joint action of the horizontal moving assembly 1, the swing adjustment assembly 2 and the forward and backward moving assembly 3, the belt receiving roller 41 abutted against the right side of the material belt product 9. At this time, the swing adjustment assembly 2 moves the material belt product 9 to the preset initial position of the corresponding rolling cylinder 71 through the belt receiving roller 41. During the swinging process of the belt receiving roller 41, the cutter assembly 43 is covered and protected by the cutter protection cover 44. During this process, the cutter assembly 43 will not cut the material belt product 9. After the belt receiving roller 41 moves to the designated position, referring to FIG. 4, the belt receiving roller 41 contacts the material belt product 9 and pulls the material belt product to the vicinity of the first roller cylinder 71 (empty cylinder) and finally makes the material belt product 9 fit to the empty first roller cylinder 71. The material belt product 9 and the rolling barrel are combined in the following ways: bonding, adsorption, pressing, etc.

After the material belt product 9 is combined with the first roller cylinder 71, the belt receiving roller driven assembly 42 drives the belt receiving roller 41 and the cutter assembly 43 to rotate and cut the material belt product 9. After the material belt product 9 is cut, the belt receiving roller 41 is retracted by the forward and backward moving assembly 3, and the entire reel changing and belt receiving module is reset by the horizontal moving assembly 1 and the swing adjustment assembly 2. At this time, the first roller cylinder 71 can realize automatic rolling, and the second roller cylinder 72 can unload the full material roll.

Similarly, when the first roller cylinder 71 is full of material, the above-mentioned actions are repeated to automatically switch between the first roller cylinder 71 and the second roller cylinder 72 without stopping the machine, which can realize full automation, reduce labor costs, save time and improve production efficiency.

Based on the reel changing and belt receiving module, and the reel changing and automatic belt receiving mechanism, the present application also provides:

A winding device including the above-mentioned reel changing and belt receiving module or the above-mentioned reel changing and automatic belt receiving mechanism.

Based on the above-mentioned reel changing and belt receiving module, the reel changing and automatic belt receiving mechanism, and the winding device, the present application also provides:
A production line, the device of the production line includes the above-mentioned reel changing and belt receiving module, or the device of the production line includes the above-mentioned reel changing and automatic belt receiving mechanism, or the production line adopts the above-mentioned winding device.

The embodiments of the present application are described in details above, but the present application is not limited to the embodiments. Those skilled in the art can also make a variety of equivalent variations or substitutions without deviating from the spirit of the present application, and such equivalent variations or substitutions are contained in the scope of the claims of the present application.

## Claims

1. A reel changing and belt receiving module, **characterized by** comprising:
a horizontal moving assembly;
wherein an output end of the horizontal moving assembly is provided with a forward and backward moving assembly, and a moving direction of the horizontal moving assembly is perpendicular to a forward and backward direction of the forward and backward moving assembly; an output end of the forward and backward moving assembly is provided with a belt receiving roller and a belt receiving roller driven assembly, and a cutter assembly is provided on the belt receiving roller; an output end of the belt receiving roller driven assembly is connected to one end of the belt receiving roller and is configured to drive the belt receiving roller to rotate, and the rotating belt receiving roller is configured to drive the cutter assembly to rotate around a central shaft of the belt receiving roller to cut a belt;
a cutter protection cover configured to rotate around the central shaft of the belt receiving roller is provided on a side of the belt receiving roller; a protection cover driven assembly is provided on an installation seat at one end of the belt receiving roller, and the protection cover driven assembly is configured to drive the cutter protection cover to rotate around the central shaft of the belt receiving roller;
the protection cover driven assembly comprises a protection cover driven motor, and the belt receiving roller driven assembly comprises a belt receiving roller driven motor, a belt receiving roller reducer provided at an output end of the belt receiving roller driven motor, and a shaft coupling connected between an output end of the belt receiving roller reducer and one end of a rotation shaft of the belt receiving roller;
a protection cover installation plate is rotatably provided on the rotation shaft of the belt receiving roller, and the cutter protection cover is installed on the protection cover installation plate; a protection cover transmission assembly is provided between an output end of the protection cover driven assembly and one of the protection cover installation plates, and the protection cover driven assembly is configured to drive the protection cover installation plate and the cutter protection cover to rotate through the protection cover transmission assembly; and
the output end of the horizontal moving assembly is provided with a swing adjustment assembly, and the forward and backward moving assembly is provided at an output end of the swing adjustment assembly.

2. The reel changing and belt receiving module according to claim 1, wherein the protection cover transmission assembly comprises an active synchronization wheel provided at the output end of the protection cover driven assembly, a driven synchronization wheel provided on one of the protection cover installation plates, and a synchronization belt wound between the active synchronization wheel and the driven synchronization wheel; and
the protection cover driven assembly is configured to drive the protection cover installation plate and the cutter protection cover to rotate through the active synchronization wheel, the synchronization belt, and the driven synchronization wheel.

3. The reel changing and belt receiving module according to claim 1, wherein the cutter assembly comprises a cutter installation seat fixedly installed on the installation shaft of the belt receiving roller, a cutter installation plate fixed on the cutter installation seat, and a sawtooth cutter fixedly installed on the cutter installation plate.

4. The reel changing and belt receiving module according to claim 1, wherein the output end of the horizontal moving assembly is provided with a horizontal moving installation seat, and the forward and backward moving assembly is directly or indirectly installed on the horizontal moving installation seat.

5. The reel changing and belt receiving module according to claim 1, wherein the swing adjustment assembly comprises a swing driven motor, a swing reducer provided at an output end of the swing driven motor, and a swing installation plate provided on an output shaft of the swing reducer; and
the forward and backward moving assembly is fixedly installed on the swing installation plate, and the swing driven motor is configured to drive the swing installation plate to swing through the swing reducer and further drive the forward and backward moving assembly to swing through the swing installation plate.

6. The reel changing and belt receiving module according to claim 1, wherein the output end of the forward and backward moving assembly is provided with a belt receiving roller installation seat, and the belt receiving roller and the belt receiving roller driven assembly are installed on the belt receiving roller installation seat.

7. The reel changing and belt receiving module according to claim 1, wherein the horizontal moving assembly comprises a horizontal moving guide rail and a horizontal moving driven motor; the forward and backward moving assembly is a pneumatic moving assembly, and the output end of the forward and backward moving assembly is provided with a forward and backward moving installation plate.

8. A reel changing and automatic belt receiving mechanism, **characterized by** comprising:
an installation main plate; and
the reel changing and belt receiving module in any one of claims 1 to 7;
wherein a rotation roller, a first roller cylinder and a second roller cylinder are provided on the installation main plate.

9. The reel changing and automatic belt receiving mechanism according to claim 8, wherein pairs of rotation rollers are provided to convey material belt products, and the first roller cylinder and the second roller cylinder are configured for rolling and cooperating for rolling work in different time periods.

10. A winding device, **characterized by** comprising:
the reel changing and belt receiving module in any one of claims 1 to 7; or
the reel changing and automatic belt receiving mechanism in any one of claims 8 to 9.

11. A production line, **characterized in that** a device of the production line comprises the reel changing and belt receiving module in any one of claims 1 to 7, or the device of the production line comprises the reel changing and automatic belt receiving mechanism in any one of claims 8 to 9, or the production line adopts the winding device in claim 10.
